# EUROPÄISCHE PATENTSCHRIFT

(11) **EP 2 676 818 B1**
(45) Veröffentlichungstag und Bekanntmachung des Hinweises auf die Patenterteilung: **14.01.2015**
(21) Anmeldenummer: 13169973.8
(22) Anmeldetag: 31.05.2013
(51) Int. Cl.: B60C 23/04, B60C 23/00

(54) **Verfahren zum Anzeigen einer Handlungsempfehlung zur Korrektur des Reifendruckes an einem oder einer Vielzahl von Fahrzeugreifen**
Method for displaying a recommendation for correcting the tyre pressure on one or a number of vehicle tyres
Procédé d'affichage d'une recommandation d'action pour la correction de la pression des pneus sur un ou plusieurs pneus de véhicule

(30) Priorität: 22.06.2012 DE 102012105452
(43) Veröffentlichungstag der Anmeldung: 25.12.2013
(73) Patentinhaber: Continental Reifen Deutschland GmbH, 30165 Hannover (DE)
(72) Erfinder: Lehmann, Jörg, 30453 Hannover (DE)

(56) Entgegenhaltungen:
- DE-A1- 19 941 953
- DE-A1-102008 049 045
- US-A1- 2006 208 865

## Beschreibung

Die Erfindung betrifft ein Verfahren zum Anzeigen einer Handlungsempfehlung zur Korrektur des Reifendruckes an einem oder einer Vielzahl von Fahrzeugreifen.

Reifenmodule werden im Reifen für verschiedene Aufgaben eingesetzt. Hierzu zählt insbesondere eine Reifenidentifikation, mit der ein Automobilhersteller u. a. schnell sowie automatisiert feststellen kann, aus welchem Reifenwerk ein bestimmter Reifen geliefert wurde und an welches Fahrzeug der Reifen montiert wurde. Andere Aufgaben sind in der Regel eine Luftdrucküberwachung, eine Temperaturmessung oder die Messung von mechanischen Spannungszuständen im Reifen. Moderne Transponder bestehen aus einem Elektronikbauteil bzw. -Chip, in dem Sensorelemente angeordnet sein können sowie aus einer an dieses Elektronikbauteil angeschlossenen Antenne. Ein Beispiel für ein Reifenmodul offenbart die DE 102 43 441 A1.

Die US 2006/208865 A1 und DE 10 2008 049045 A1 offenbaren bekannte Verfahren für eine Reifendruckkontrolle.

Der Erfindung lag die Aufgabe zugrunde, ein Verfahren bereitzustellen, mit dem herkömmliche Systeme für eine Reifendruckkontrolle verbessert werden können.

Gelöst wird die Aufgabe durch ein Verfahren nach Anspruch 1.

Ein Vorteil der Erfindung ist insbesondere darin zu sehen, dass durch das erfindungsgemäße Verfahren auf einfache Weise angezeigt wird, an welchem Fahrzeugreifen eine Reifendruckkorrektur erforderlich ist und an welchem Fahrzeugreifen ebenfalls eine Reifendruckkorrektur durchgeführt werden sollte. Insbesondere bei Nutzfahrzeugen mit einem Anhänger wird mit dem System zur Drucküberwachung eine Vielzahl von Fahrzeugreifen überwacht. Das Reifendruckkontrollsystem führt immer dann zu einer Warnung, wenn der Reifendruck einen vorgegebenen Grenzwert unterschreitet. Nutzfahrzeugreifen mit einer normalen Diffusion weisen einen Druckverlust von ca. 0,1bar pro Monat auf. Dieser Druckverlust variiert je nach Reifentyp, Reifenalter, Reifenzustand und Nutzungsprofil. Ein Fahrzeugreifen mit 8 Bar Nenndruck würde beispielsweise nach ca. 8 Monaten den ersten Grenzwert von beispielsweise 7,2 bar erreichen. Beim Erreichen dieses Grenzwertes würde das Reifendruckkontrollsystem eine entsprechende Warnung anzeigen. Der Druckverlust an den einzelnen Fahrzeugreifen eines Nutzfahrzeuges ist jedoch im Allgemeinen unterschiedlich. Die Reifen erreichen den Schwellwert in der Regel zu unterschiedlichen Zeiten. In der Folge bekommt der Fahrer eine Vielzahl von Warnungen in einem vergleichsweise kleinen Zeitfenster. Der Fahrer des Fahrzeuges hat somit einen relativ hohen Wartungsaufwand, wenn er nach jeder einzelnen Warnung jeweils nur den bewarnten Fahrzeugreifen befüllt. An allen Fahrzeugreifen nur auf Verdacht eine Druckkorrektur vorzunehmen ist aufgrund der Vielzahl der Fahrzeugreifen an einem LKW-Anhänger ebenfalls nicht sinnvoll und würde dem Einsatz einer Reifendruckkontrolle widersprechen. Ein wesentlicher Vorteil des erfindungsgemäßen Verfahrens besteht somit darin, dass der Wartungsaufwand insgesamt wesentlich reduziert wird. Sobald bei einem der Fahrzeugreifen festgestellt wird, dass ein erster Reifendruckschwellwert unterschritten worden ist, erfolgt ebenfalls eine Druckkontrolle an allen anderen Fahrzeugreifen. Auf diese Weise werden weitere kritische Fahrzeugreifen erfasst, die ebenfalls einen Druckwert nahe dem ersten Reifendruckschwellwert aufweisen. Dies hat zur Folge, dass der Wartungsaufwand zur Durchführung von Druckkorrekturen an den Fahrzeugreifen insgesamt wesentlich reduziert wird. Es wird damit auf eine einfache Weise ausgeschlossen, dass der Fahrer eine Vielzahl von Warnungen in einem vergleichsweise kleinen Zeitfenster erhält.

Es ist vorgesehen, dass der erste Reifendruckschwellwert bei ca. 90 % des vorgegebenen Sollwertes für den Reifendruck liegt und Fahrzeugreifen mit einem Druckwert zwischen 90 und 95 % bei Schritt d) als weitere kritische Fahrzeugreifen identifiziert werden. Dadurch werden auf eine einfache Weise weitere kritische Fahrzeugreifen identifiziert, die einen Druckwert nahe dem ersten Reifendruckschwellwert aufweisen.

In einer weiteren vorteilhaften Weiterbildung der Erfindung ist vorgesehen, dass ein zweiter Reifendruckschwellwert bei ca. 80 % des vorgegebenen Sollwertes für den Reifendruck liegt und Fahrzeugreifen mit einem Druckwert zwischen 80 und 85 % bei Schritt d) als weitere kritische Fahrzeugreifen identifiziert werden.

Der zweite Reifendruckschwellwert zeigt eine zweite Warnunstufe an. Diese Warnstufe signalisiert dem Fahrer, dass der Reifendruck an dem entsprechenden Fahrzeugreifen einen sehr kritischen Druckwert unterschritten hat und eine Weiterfahrt nur noch bedingt zu empfehlen ist.

In einer weiteren vorteilhaften Weiterbildung der Erfindung ist vorgesehen, dass vor Schritt f) die aktuelle Situation des Fahrzeuges in Hinblick auf unterschiedliche Randbedingungen analysiert und anschließend die Handlungsempfehlung mit einem Algorithmus angepasst wird,
wobei ein für den Fahrer günstiger Zeitpunkt für eine Druckkorrektur ermittelt wird.

Auf diese Weise wird sichergestellt, dass der Fahrer zu einem günstigen Zeitpunkt bewamt wird. Ein günstiger Zeitpunkt liegt beispielsweise vor, wenn sich das Fahrzeug in der Nähe eines Servicepoints befindet.

In einer weiteren vorteilhaften Weiterbildung der Erfindung ist vorgesehen, dass die unterschiedlichen Randbedingungen die Fahrzeugposition, die Verkehrssituation und/oder den Abstand zum nächstliegenden Servicepoint umfassen.

Mit diesen Randbedingungen kann ebenfalls ein günstiger Zeitpunkt identifiziert werden, zu dem eine entsprechende Warnung an den Fahrer ausgegeben werden soll. Mit der Fahrzeugposition und der geplanten Wegroute kann beispielsweise ermittelt werden, ob das Fahrzeug in der nächsten Zeit an einer Tankstelle oder einem anderen Servicepoint vorbeifährt.

In einer weiteren vorteilhaften Weiterbildung der Erfindung ist vorgesehen, dass bei einem für den Fahrer günstigen Zeitpunkt für eine Druckkorrektur der erste und/oder der zweite Reifendruckschwellwert um ca. 2% angehoben wird.

In diesem Fall wird also geringfügig früher als notwendig gewarnt, sofern günstige Bedingungen für eine Druckkorrektur vorhanden sind. Günstige Bedingungen liegen beispielsweise vor, wenn das Fahrzeug sich am Ausgangsort mit einem Servicepoint befindet. Unter diesen Umständen lässt sich eine Druckkorrektur schnell und ohne Zeitdruck durchführen.

In einer weiteren vorteilhaften Weiterbildung der Erfindung ist vorgesehen, dass die Ermittlung der Randbedingungen mit einem GPS-System erfolgt.

Mit einem GPS-System lässt sich einfach und präzise die Fahrzeugposition ermitteln.

In einer weiteren vorteilhaften Weiterbildung der Erfindung ist vorgesehen, dass die Handlungsempfehlung zu einem Display im Armaturenbrett des Fahrzeugs weitergegeben wird. Durch die optische Anzeige der Handlungsempfehlung wird der Fahrer schnell und einfach darüber informiert, an welchen Fahrzeugreifen eine Reifendruckkorrektur zu erfolgen hat. Diese Information kann alternativ auch über ein akustisches Signal oder eine digitalisierte Sprachausgabe erfolgen.

In einer weiteren vorteilhaften Weiterbildung der Erfindung ist vorgesehen, dass die Handlungsempfehlung über ein akustisches Signal an den Fahrer weitergeleitet wird.

Das akustische Signal wird beispielsweise ausgelöst, wenn der Reifendruck den zweiten Schwellwert unterschreitet.

In einer weiteren vorteilhaften Weiterbildung der Erfindung ist vorgesehen, dass der Drucksensor in einem Reifenmodul auf der Reifeninnenseite des Fahrzeugreifens angeordnet ist. Durch die Anordnung des Drucksensors an der Innenseite des Reifens wird der Druck im Reifen genauer gemessen. Wird der Sensor an der Felge angeordnet, kann es durch die Temperaturerhöhung der Felge dazu kommen, dass ein ungenauer Druckwert des Reifens angezeigt wird.

An einem Ausführungsbeispiel soll die Erfindung nachfolgend erläutert werden.

Der Drucksensor wird an der Reifeninnenseite angebracht und misst in regelmäßigen Abständen den Reifendruck. Der Reifendruck wird an eine zentrale Empfangseinheit im Fahrzeug weitergeleitet. Bei dem erfindungsgemäßen Verfahren wird eine bereits bestehende Empfangs- und Anzeigeinfrastruktur des Fahrzeugs mit einer zentralen Empfangseinheit genutzt.

Sobald ein Fahrzeugreifen den ersten Reifendruckschwellwert unterschreitet, wird ebenfalls eine Reifendruckkontrolle an allen weiteren Fahrzeugreifen des Fahrzeuges durchgeführt. Anschließend werden über einen bestimmten Algorithmus weitere kritische Fahrzeugreifen identifiziert, die einen Druckwert nahe dem ersten Reifendruckschwellwert aufweisen. Bei einem weiteren Überprüfungsalgorithmus werden ebenfalls einzelne Randbedingungen überprüft, wie beispielsweise der Abstand zum nächsten Servicepoint. Im Ergebnis erfolgt eine entsprechende Handlungsempfehlung an den Fahrer des Fahrzeuges, woraus ersichtlich ist, an welchem Fahrzeugreifen eine Druckkorrektur vorzunehmen ist. Durch das Verfahren wird der Wartungsaufwand insbesondere bei Nutzfahrzeugen mit LKW-Anhängern erheblich reduziert.

## Patentansprüche

1. Verfahren zum Anzeigen einer Handlungsempfehlung zur Korrektur des Reifendruckes an einem oder einer Vielzahl von Fahrzeugreifen in Verbindung mit einer Reifendrucküberwachung mit folgenden Schritten:
a) Messen des Reifendrucks über einen Drucksensor im Fahrzeugreifen in regelmäßigen Zeitabständen,
b) Detektieren einer ersten Warnstufe bei der der Reifendruck von einem kritischen Fahrzeugreifen unter einen vorgegebenen ersten Reifendruck-Schwellenwert absinkt,
c) Ermitteln und Analysieren der einzelnen Druckwerte an allen Fahrzeugreifen des Fahrzeuges,
d) Identifizieren von weiteren kritischen Fahrzeugreifen, die einen Druckwert nahe dem ersten Reifendruck-Schwellwert aufweisen,
wobei der erste Reifendruckschwellwert bei ca. 90 % des vorgegebenen Sollwertes für den Reifendruck liegt und Fahrzeugreifen mit einem Druckwert zwischen 90 und 95 % als weitere kritische Fahrzeugreifen identifiziert werden,
e) Ermittlung einer Reifendruckkontroll-Warnung für den bei Schritt b) ermittelten kritischen Fahrzeugreifen und weiteren bei Schritt d) ermittelten kritischen Fahrzeugreifen,
f) Übermittlung einer Handlungsempfehlung an den Fahrer des Fahrzeuges, wodurch dem Fahrer angezeigt wird an welchen Fahrzeugreifen der Reifendruck an einen vorgegebenen Sollwert anzupassen ist.

2. Verfahren nach Anspruch 1,
dadurch gekennzeichet, dass
ein zweiter Reifendruckschwellwert bei ca. 80 % des vorgegebenen Sollwertes für den Reifendruck liegt und Fahrzeugreifen mit einem Druckwert zwischen 80 und 85 % bei Schritt d) als weitere kritische Fahrzeugreifen identifiziert werden.

3. Verfahren nach einem der vorhergehenden Ansprüche,
**dadurch gekennzeichnet, dass**
vor Schritt f) die aktuelle Situation des Fahrzeuges in Hinblick auf unterschiedliche Randbedingungen analysiert und anschließend die Handlungsempfehlung mit einem Algorithmus angepasst wird,
wobei ein für den Fahrer günstiger Zeitpunkt für eine Druckkorrektur ermittelt wird.

4. Verfahren nach einem der vorhergehenden Ansprüche,
**dadurch gekennzeichnet, dass**
die unterschiedlichen Randbedingungen die Fahrzeugposition, die Verkehrssituation und/oder den Abstand zum nächstliegenden Servicepoint umfassen.

5. Verfahren nach einem der vorhergehenden Ansprüche,
**dadurch gekennzeichnet, dass**
bei einem für den Fahrer günstigen Zeitpunkt für eine Druckkorrektur der erste und/oder der zweite Reifendruckschwellwert um ca. 2% angehoben wird.

6. Verfahren nach einem der vorhergehenden Ansprüche,
**dadurch gekennzeichnet, dass**
die Ermittlung der Randbedingungen mit einem GPS-System erfolgt.

7. Verfahren nach einem der vorhergehenden Ansprüche,
**dadurch gekennzeichnet, dass**
die Handlungsempfehlung zu einem Display im Armaturenbrett des Fahrzeuges weitergeleitet wird.

8. Verfahren nach einem der vorhergehenden Ansprüche,
**dadurch gekennzeichnet, dass**
die Handlungsempfehlung über ein akustisches Signal an den Fahrer weitergeleitet wird.

9. Verfahren nach einem der vorhergehenden Ansprüche,
**dadurch gekennzeichnet, dass**
der Drucksensor in einem Reifenmodul auf der Reifeninnenseite des Fahrzeugreifens angeordnet ist.

## Claims

1. Method for displaying a recommended action for correcting the tyre pressure on one or more vehicle tyres in conjunction with monitoring of the tyre pressure having the following steps:
a) measuring the tyre pressure at regular time intervals by means of a pressure sensor in the vehicle tyre,
b) detecting a first warning stage at which the tyre pressure of a critical vehicle tyre drops below a predefined first tyre pressure threshold value,
c) determining and analysing the individual pressure values at all the vehicle tyres of the vehicle,
d) identifying further critical vehicle tyres which have a pressure value near to the first tyre pressure threshold value,
wherein the first tyre pressure threshold value is approximately 90% of the predefined setpoint value for the tyre pressure, and vehicle tyres with a pressure value between 90 and 95% are identified as further critical vehicle tyres,
e) determining a tyre pressure-monitoring warning for the critical vehicle tyre identified in step b), and for the further critical vehicle tyre identified in step d),
f) transmitting a recommended action to the driver of the vehicle, as a result of which it is indicated to the driver at which vehicle tyre the tyre pressure is to be adapted to a predefined setpoint value.

2. Method according to Claim 1,
**characterized in that**
a second tyre pressure threshold value is approximately 80% of the predefined setpoint value for the tyre pressure, and vehicle tyres with a pressure value between 80 and 85% are identified as further critical vehicle tyres in step d).

3. Method according to one of the preceding claims,
**characterized in that**
before step f), the current situation of the vehicle is analysed with respect to different peripheral conditions, and the recommended action is subsequently adapted with an algorithm,
wherein a time for a pressure correction which is favourable for the driver is determined.

4. Method according to one of the preceding claims,
**characterized in that**
the different peripheral conditions comprise the position of the vehicle, the traffic situation and/or the distance from the closest service point.

5. Method according to one of the preceding claims,
**characterized in that**
at a time for a pressure correction which is favourable for the driver the first and/or the second tyre pressure threshold value is raised by approximately 2%.

6. Method according to one of the preceding claims,
**characterized in that**
the peripheral conditions are determined with a GPS system.

7. Method according to one of the preceding claims,
**characterized in that**
the recommended action is passed on to a display on the dashboard of the vehicle.

8. Method according to one of the preceding claims,
**characterized in that**
the recommended action is passed on to the driver by means of an acoustic signal.

9. Method according to one of the preceding claims,
**characterized in that**
the pressure sensor is arranged in a tyre module on the inside of the vehicle tyre.

## Revendications

1. Procédé d'affichage d'une recommandation de manipulation en vue de corriger la pression d'un ou de plusieurs bandages de roues d'un véhicule en association avec une surveillance de la pression des bandages de roues, le procédé présentant les étapes suivantes :
a) mesure à intervalles réguliers de la pression de bandage de roues par un capteur de pression prévu dans le bandage de roue du véhicule,
b) détection d'un premier niveau d'avertissement auquel la pression d'un bandage de roue critique du véhicule descend en dessous d'une première valeur de seuil prédéterminée de pression du bandage de roue,
c) détermination et analyse des différentes valeurs de pression sur tous les bandages de roues du véhicule,
d) identification d'autres bandages de roues critiques du véhicule, dont la valeur de pression est proche de la première valeur de seuil de la pression de bandage de roue,
la première valeur de seuil de pression de bandage de roue étant d'environ 90 % de la valeur de consigne prédéterminée de la pression du bandage de roue et les bandages de roues du véhicule dont la valeur de pression est située entre 90 et 95 % étant identifiés comme autres bandages de roues critiques du véhicule,
e) détermination d'un avertissement de contrôle de la pression des bandages de roues pour le bandage de roue critique du véhicule déterminé à l'étape b) et des autres bandages de roues critiques du véhicule déterminés à l'étape d) et
f) transmission d'une recommandation de manipulation au conducteur du véhicule, ce qui indique au conducteur sur quel bandage de roue du véhicule la pression doit être ramenée à une valeur de consigne prédéterminée.

2. Procédé selon la revendication 1, **caractérisé en ce qu'**une deuxième valeur de seuil de pression de bandage de roue située à environ 80 % de la valeur de consigne prédéterminée de la pression de bandage de roue et **en ce que** les bandages de roues du véhicule dont la valeur de pression est comprise entre 80 et 85 % sont identifiés à l'étape d) comme autres bandages de roues critiques du véhicule.

3. Procédé selon l'une des revendications précédentes, **caractérisé en ce qu'**avant l'étape f), la situation effective du véhicule à propos de différentes conditions est analysée, la recommandation de manipulation étant ensuite adaptée à l'aide d'un algorithme, un instant favorable pour une correction de pression par le conducteur étant déterminé.

4. Procédé selon l'une des revendications précédentes, **caractérisé en ce que** les différentes conditions comprennent la position du véhicule, la situation du trafic et/ou la distance par rapport au point de service le plus proche.

5. Procédé selon l'une des revendications précédentes, **caractérisé en ce que** pour déterminer l'instant favorable pour une correction de pression par le conducteur, la première et/ou la deuxième valeur de seuil de pression de bandage de roue sont relevées d'environ 2 %.

6. Procédé selon l'une des revendications précédentes, **caractérisé en ce que** la détermination des conditions s'effectue à l'aide d'un système GPS.

7. Procédé selon l'une des revendications précédentes, **caractérisé en ce que** la recommandation de manipulation est transmise à un affichage prévu dans le tableau de bord du véhicule.

8. Procédé selon l'une des revendications précédentes, **caractérisé en ce que** la recommandation de manipulation est transmise au conducteur par l'intermédiaire d'un signal acoustique.

9. Procédé selon l'une des revendications précédentes, **caractérisé en ce que** le capteur de pression est disposé dans un module de bandage de roue situé sur le côté intérieur du bandage de roue du véhicule.
